# EUROPEAN PATENT SPECIFICATION

(11) **EP 2 472 307 B1**
(45) Date of publication and mention of the grant of the patent: **01.03.2017**
(21) Application number: 10811650.0
(22) Date of filing: 29.07.2010
(51) Int. Cl.: B29D 11/00, B24B 1/00, B24B 13/01, B24B 37/02, G02B 5/30

(54) **METHOD FOR MANUFACTURING POLARIZING ELEMENT**
VERFAHREN ZUR HERSTELLUNG EINES POLARISIERENDEN ELEMENTS
MÉTHODE DE FABRICATION D'UN ÉLÉMENT POLARISANT

(30) Priority: 31.08.2009 JP 2009200493
(43) Date of publication of application: 04.07.2012
(73) Proprietor: Hoya Corporation, Tokyo 161-8525 (JP)
(72) Inventor: WATANABE Yoshifumi, Shinjuku-ku, Tokyo 161-8525 (JP); KUWAMURA Hiroshi, Shinjuku-ku, Tokyo 161-8525 (JP); SHIRAISHI Toshihiro, Shinjuku-ku, Tokyo 161-8525 (JP)
(74) Representative: Günther, René
(86) International application number: PCT/JP2010/062841
(87) International publication number: WO 2011/024599

(56) References cited:
- EP-A1- 1 674 898
- WO-A1-2005/050265
- JP-A- 59 038 703
- JP-A- 2000 210 853
- JP-A- 2005 277 051
- JP-A- 2008 527 401
- US-A- 2 577 620
- US-A1- 2002 176 158
- US-A1- 2004 229 553
- US-B2- 7 066 794

## Description

### Technical Field

The present invention relates to a method for forming a polarizing element by applying a polarizing dye on a base body and to a method for manufacturing a polarizing lens.

### Background Art

A polarizing lens which selectively transmits light on a wave surface of natural light does not transmit diffusedly reflected light, and therefore, it is used for sunglasses and the like. In general, the polarizing lens is fabricated by inserting a polarizing film into a lens base.

If a polarizing film completed in advance is to be attached on the surface of a spectacle lens, it occurs that the shapes of the polarizing film and the lens surface do not match each other and sufficient polarization characteristics are not be gained. Moreover, since the film is attached after the lens is fabricated, the attached portion becomes a weak point and promotes aging of the lens.

Therefore, as a method for fabricating a polarizing lens without attaching a polarizing film, a method of giving polarizing capability by directly arranging a polarizing dye has been examined. For example, as a method of supplying a polarizing dye onto the surface of a lens, a method of rotating the lens using a position shifted from the center axis of the lens as a rotary shaft so that a solution containing the polarizing dye flows on the lens curved surface (see Patent Literature 1, for example).

Moreover, for example, it is proposed to manufacture a polarizing element by forming parallel grooves on the lens surface on which an inorganic coat has been formed, using a wheel brush made of urethane and holding abrasive grain slurry such as zirconia, etc., and by applying a polarizing dye on the parallel grooves (see Patent Literature 2, for example).
Patent Literature 1: Japanese Patent Application Publication (Japanese translation of PCT international publication) No. 2007-250739
Patent Literature 1: Japanese Patent Application Publication (Japanese translation of PCT international publication) No. 2008-527401

### Disclosure of the Invention

### Problems to be Solved by the Invention

However, with the method of supplying a solution containing a polarizing dye onto the lens surface, whether or not the polarizing dye adheres onto the lens surface in an orderly fashion and a homogenous polarizing element is formed are affected by the composition, shape, etc. of the surface to be applied. Thus, individual differences occur in polarizing elements and polarizing lenses that are manufactured.

Moreover, with the technology of forming parallel grooves on the lens surface using a brush, since the lens surface is a curved surface, the contact pressure with the brush on the lens surface does not become uniform. Also, a force to escape to the side acts on the edge portion of the brush, other than the force toward the advancing direction of the brush. As a result, a groove is also formed in a direction different from the parallel grooves (diagonal direction), and it is difficult to form homogenous parallel grooves over the whole lens surface. Therefore, desired polarization characteristics cannot be obtained. Thus, uneven distribution might occur in the fixed state of the polarizing dye, or polarization characteristics in a different direction might appear. In order to form a homogenous polarizing element on the lens surface using a brush, the contact pressure of the brush with the lens surface should be adeptly adjusted. However, in the case of spectacle lenses for which a large number of curved shapes can be expected by optical designs of products, adjustment for each product is extremely difficult.

In order to solve the above-described problems, the present invention provides a method for manufacturing a polarizing element in which parallel grooves can be reliably formed and the polarizing element can be formed homogenously by application of a polarizing dye, and a method for manufacturing a polarizing lens by applying this polarizing element.

### Means for Solving the Problems

The invention is defined in independent claim 1. Embodiments are defined in the dependent claims.

The method for manufacturing a polarizing lens of an example includes the steps of: forming parallel grooves on a convex surface of a lens base by pressing the convex surface of the lens base onto a rotating surface of an elastic body and rotating the elastic body, the rotating surface having a length in a rotary shaft direction larger than a diameter of the lens base and holding abrasive grains; applying a polarizing dye on the convex surface of the lens base on which the parallel grooves have been formed; and fixing the polarizing dye to form a polarizing element on the convex surface of the lens base.

Moreover, the method for manufacturing a polarizing element of the present invention includes the steps of: forming parallel grooves on a convex surface of a base by pressing the convex surface of the base onto a rotating surface of an elastic body and rotating the elastic body, the rotating surface having a length in a rotary shaft direction larger than a diameter of the base and holding abrasive grains; applying a polarizing dye on the convex surface of the base on which the parallel grooves have been formed; and fixing the polarizing dye.

According to the method for manufacturing a polarizing lens of the present invention, the parallel grooves on a convex surface of a lens base are formed by pressing the convex surface of the lens base onto the rotating surface of an elastic body. Moreover, the rotating surface of the elastic body is larger than the diameter of the lens base. Therefore, the parallel grooves can be formed on the whole region of the convex surface of the lens base by one scratching, and accordingly the parallel grooves can be formed uniformly. By forming such uniform parallel grooves, the polarizing dye to be fixed in respective parallel grooves can be uniformly arranged. Therefore, the polarizing lens can be manufactured by forming the polarizing element stably on the surface of the lens base.

### Advantageous Effects of the Invention

According to the present invention, a homogenous polarizing element can be manufactured stably by application of a polarizing dye. Moreover, by applying this technology of forming a polarizing element, a polarizing lens with good quality can be manufactured.

### Brief Description of Drawings

Fig. 1 is a diagram illustrating a flowchart of an embodiment of a method for manufacturing a polarizing lens of the present invention.
Fig. 2 is a diagram illustrating a step of forming parallel grooves on a lens base using an elastic body according to the method for manufacturing a polarizing lens of the present invention.
Fig. 3 is a diagram illustrating a relationship between the radius of curvature of the surface of a lens base and the radius of curvature of the elastic body.
Fig. 4 is a diagram illustrating a relationship in size between the elastic body and the lens base.
Fig. 5 is a diagram illustrating a step of forming parallel grooves on a lens base using a wheel brush used in a comparative example.
Fig. 6 is a photo of polarizing lenses fabricated as examples.
Fig. 7 is a photo of a polarizing lens fabricated as a comparative example.

### Best Mode for Carrying Out the Invention

As examples of a method for manufacturing a polarizing element of the present invention and a method for manufacturing a polarizing lens, an embodiment of the method for manufacturing a polarizing lens by forming a polarizing element on a lens base will be described below.

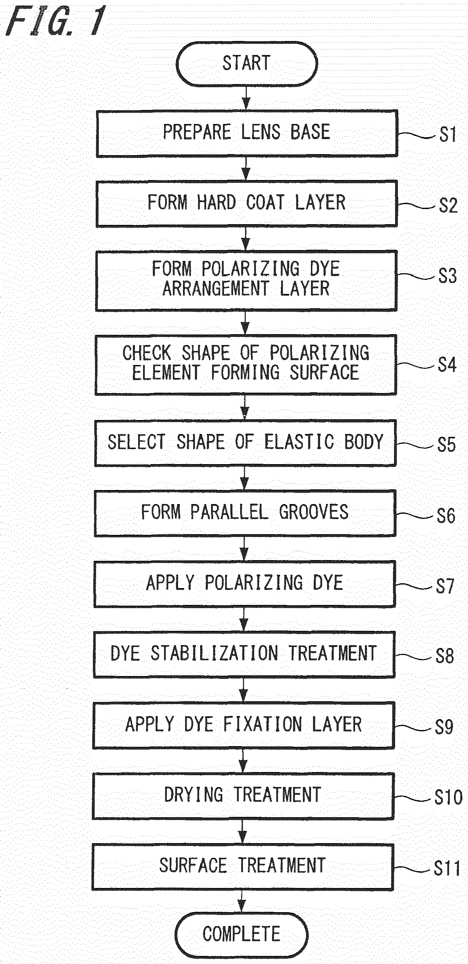

First, a flowchart of the method for manufacturing a polarizing lens is illustrated in Fig. 1.

First, a lens base for forming a polarizing element is prepared (Step S1). On a surface of the lens base prepared in Step S1, a hard coat layer is formed (Step S2) . On a convex surface of the lens base on which the polarizing element is to be formed, a polarizing dye arrangement layer is formed (Step S3). The shape of the convex surface of the lens base on which the polarizing element is formed is checked (Step S4). In accordance with the shape of the convex surface of the lens base checked in Step S4, the shape of an elastic body for forming parallel grooves on the surface of the polarizing dye arrangement layer is selected (Step S5). In a state that abrasive grains are held, the elastic body is brought into contact with the convex surface of the lens base, and parallel grooves are formed in the polarizing dye arrangement layer formed in Step S3 (Step S6). On the polarizing dye arrangement layer in which the parallel grooves have been formed in Step S6, a polarizing dye is applied (Step S7). Stabilization treatment is applied to the polarizing dye applied on the surface of the lens base (on the polarizing dye arrangement layer in which the parallel grooves have been formed) in Step S7 (Step S8) . On the polarizing dye stabilized in Step S8, a dye fixation layer solution is applied (Step S9). The dye fixation layer solution applied in Step S9 is subjected to drying and thermal curing treatment, and a dye fixation layer is formed (Step S10). On the lens base on which the polarizing element has been formed in the process up to Step S10, various coat layers are formed as necessary (Step S11).

With the above-described process, a polarizing lens having a polarizing element can be fabricated.

Next, each step will be described in detail.

### <Step S1>

First, a lens base for forming a polarizing element is prepared. As the lens base, a resin base for a plastic lens, an inorganic glass base for a glass lens, etc. can be used.

In the case of a resin base, for example, a homopolymer or copolymer of methylmethacrylate, diethylene glycol bis-arylcarbonate such as CR39 by PPG Industries and the like, thermosetting polyurethanes, thermosetting polythiols, polyepisulfides, etc. can be used.

The surface of the lens base can be a convex surface of a base for a spectacle lens. Also, the surface shape can be various free-form surfaces, regardless of whether it is spherical or aspherical.

### <Step S2>

A hard coat layer is formed on a surface of the lens base. When the hard coat layer is cured, for example, by a thermally curing method, a coating composition made of an organic silicon compound and an inorganic oxide colloidal particle is used.

As the organic silicon compound, various silane coupling agents, for example, an alkoxysilane compound, can be used. As the inorganic oxide, silica, alumina, zirconia, titania, etc. can be used. The inorganic oxide colloidal particle is selected and adjusted appropriately and is mixed with the organic silicon compound, for example, with the purpose of giving high hardness to the hard coat layer and of making adjustment such that the refractive index of the hard coat layer becomes equal to the refractive index of the lens base.

If curing is performed using an ultraviolet curing method, a conventional known ultraviolet curing material can be used, and for example, a material, which is composed of compositions containing multifunctional acrylates such as pentaerythritol triacrylate, metal oxide particulates such as antimony oxide, and photopolymerization initiator such as 1-hydroxycyclohexyl phenyl ketone, can be used.

The hard coat layer is obtained by applying a coating composition on the lens base using a dipping method, a spin coat method, a spray coat method, and the like, and curing treatment is applied.

Also, a surfactant, an ultraviolet absorber, an antioxidant, a light stabilizer, etc. can be added within a limit that does not affect physical property of the hard coat layer.

If an inorganic glass base is used as the lens base, the hard coat layer does not have to be formed.

### <Step S3>

On the surface of the lens base on which a polarizing element is to be formed, a polarizing dye arrangement layer is formed.

The polarizing dye arrangement layer is formed by an inorganic oxide layer, a sol-gel layer in which an inorganic oxide has been dispersed in a colloidal state, etc. Particularly, a deposition layer of a glass-like inorganic oxide is preferably formed by deposition of an inorganic oxide. The deposition layer is preferably formed using known thin-film formation technologies such as a vacuum deposition method, a chemical vapor deposition (CVD) method, a physical vapor deposition (PVD) method, a plasma deposition method, and the like. As the inorganic oxide, an oxide made of one or two or more elements selected from Si, Al, Zr, Ti, Ge, Sn, Sb, Ta, Nb, V, and Y can be cited.

The polarizing dye arrangement layer can be formed on a hard coat layer if the hard coat layer has been formed on the lens base. Moreover, if the inorganic glass base is used as the lens base, it is only necessary to directly apply a polarizing dye on the lens base, and this step can be omitted.

If the polarizing dye arrangement layer is formed by a sol-gel layer, it is formed by causing a polarizing dye arrangement layer coating solution to adhere onto the lens base.

The polarizing dye arrangement layer coating solution preferably contains an alkoxysilane compound and/or a hexaalkoxydisiloxane compound. A hydrolysis reaction progresses in the coating solution in the presence of water, and a continuous framework in the layer is formed. Also, it gives curability to the polarizing dye arrangement layer and suppresses separation of the polarizing element formed on the polarizing dye arrangement layer.

As the polarizing dye arrangement layer coating solution, inorganic oxide sol, a solvent, a curing catalyst, and the like are further mixed as necessary. As the inorganic oxide, an oxide made of one or more types of elements selected from Mg, Ca, Sr, Ba, Al, In, Ge, Bi, Cu, Y, Zr, Ni, Ta, Si, Ti, etc. can be used. Among them, SiO₂, TiO₂, ZrO₂, CeO₂, ZnO, SnO₂, ITO (Indium Tin Oxide) are preferable since they improve hardness of the arrangement layer, realize stable fixation of the polarizing dye, and manufacture is easy.

After an alkoxysilane compound and/or a hexaalkoxydisiloxane compound, water, and alcohols are mixed, this solution is subjected to heating treatment, and the polarizing dye arrangement layer coating solution is prepared by hydrolysis reaction and condensation polymerization of the alkoxy group of an alkoxysilane composition by the sol-gel method.

Then, the prepared arrangement layer coating solution is applied on the lens base surface and cured, and thereby the polarizing dye arrangement layer is formed.

### <Step S4>

The shape of the surface of the lens base on the side on which the polarizing element is to be formed is checked. Particularly, the radius of curvature of the convex surface of the lens base, the outer diameter of the lens base, etc. are checked.

### <Step S5>

The shape of the elastic body for forming grooves is selected in accordance with the conditions for the shape of the lens base checked in Step S4, such as the surface shape, the outer diameter, the radius of curvature, etc.

The elastic body for forming grooves is formed in the shape of a rotating body. The surface of the lens base on which the polarizing dye is applied is pressed onto the rotating surface of the elastic body formed in the shape of a rotating body, and the elastic body is rotated, whereby parallel grooves are formed in the lens base. At this time, the elastic body holds abrasive grains. The rotating surface of the elastic body onto which the lens base is pressed is formed as the concave curved surface in conformity to the radius of curvature of the convex surface of the lens base checked in Step S4. The elastic body preferably has an arc-shaped rotating surface in a region that is brought in contact with the surface of the lens base to be worked (i.e., the convex surface) so that the whole surface of the surface of the lens base to be worked can be effectively worked by one scratching. Moreover, the length in the rotary shaft direction of the rotating surface of the elastic body for forming grooves is longer than the diameter of the lens base in which parallel grooves are formed.

The curved surface of the rotating surface of the elastic body has such a shape that when the lens base is pressed onto the rotating surface of the elastic body, the lens base and the rotating surface of the elastic body are in elastic contact with each other substantially uniformly in the axial direction of the rotating surface. The rotating surface does not have to be formed entirely of an elastic body, and it is only necessary that at least the portion of the rotating surface that is brought in contact with the lens base is formed of an elastic body. Because the rotating surface onto which the lens base is pressed is formed of an elastic body, when the lens base is pressed onto the rotating surface, the pressure of elastic contact between the lens base and the rotating surface becomes uniform by the elasticity of the rotating surface made of an elastic body. As a result, the depth, width, density, etc. of the parallel grooves which are formed in the lens base can be made uniform.

Thus, the elastic body for forming grooves is a rotationally symmetrical body around the rotary shaft. The rotating surface of the elastic body is worked into a curved surface having a concave cross section. Moreover, the rotating surface onto which the lens base is pressed is made of an elastic body and abrasive grains held by the elastic body. Since the rotating surface is formed of an elastic body, by pressing the lens base onto the rotating surface formed of an elastic body, the lens base surface is brought into elastic contact with the rotating surface formed of an elastic body uniformly in the direction of the rotary shaft. Furthermore, the length in the rotary shaft direction of the rotating surface of the elastic body is longer than the diameter of the lens base in which parallel grooves are formed. Therefore, when the lens base is pressed onto the rotating surface of the elastic body, the lens base is uniformly brought into elastic contact with the rotating surface of the elastic body in the diameter direction of the lens base.

For the rotating surface of the elastic body, a curved surface is selected, having a shape that the whole region in the diameter direction of the convex surface of the lens base can be fully brought into contact with the rotating surface when the convex surface of the lens base is pushed onto the rotating surface of the elastic body. The pushing-in amount of the lens base onto the elastic body is preferably determined in accordance with the hardness, etc. of the elastic body. In this description, the term "pushing-in amount" or "pushed-in amount" refers to a distance that the lens base is moved further from a reference point position to the rotating surface of the elastic body, wherein the reference point position is where at least a part of the lens base surface is first brought into contact with the rotating surface of the elastic body when the lens base surface is opposed to the rotating surface and the both surfaces are brought close to each other along the straight line connecting the center of the elastic body and the center of the lens base surface.

The curved surface of the rotating surface of the elastic body is selected appropriately in accordance with the radius of curvature of the lens base.

Based on the surface shape of the lens base, it is preferable that an elastic body having such a curved surface on the rotating surface is selected, that a difference between a sag value from the lens base center to the lens base edge portion and a sag value of the curved surface of the rotating surface of the elastic body is 2.5 mm or less. Assuming that the pushing-in amount of the lens base onto the rotating surface of the elastic body is 5 mm or less, it is only necessary that the whole region in the diameter direction of the convex surface of the lens base, or preferably the whole region of the convex surface of the lens base, can be uniformly brought into elastic contact with the rotating surface of the elastic body. The parallel grooves can be reliably formed over the whole region of a convex surface of a lens base using an elastic body having a rotating surface having a concave curved surface close to the radius of curvature of the convex surface of the lens base.

An example of the relationship between the radius of curvature of the lens base surface and the radius of curvature of a curved surface of a rotating surface of an elastic body is illustrated in Table 1. Table 1 illustrates the radius of curvature of the rotating surface of the elastic body (Tool Radius), the radius of curvature of the lens base (Lens Radius) in which parallel grooves can be formed with the rotating surface with such radius of curvature, the diameter of the lens base (Size), and the pushing-in amount of the lens base onto the rotating surface of the elastic body when forming the parallel grooves.

**[Table 1]**

| Tool Radius (mm) | Lens Radius (mm) | Size(mm) | Pushing-in amount |
|---|---|---|---|
| | 979.077 | 65 | |
| | 375.882 | 70 | |
| 600 | 349.023 | 65 | 2.0 |
| | 318.019 | 70 | |
| | 249.298 | 70 | |
| | 209.580 | 70 | |
| | 151.420 | 70 | |
| 180 | 139.858 | 70 | 2.0 |
| | 125.382 | 70 | |
| | 118.483 | 70 | |
| 120 | 107.460 | 70 | 2.0 |
| | 102.441 | 70 | |
| | 94.739 | 70 | |
| | 85.062 | 70 | |
| 90 | 79.482 | 70 | 2.0 |
| | 76.956 | 70 | |
| | 66.517 | 70 | |
| | 64.763 | 70 | 2.0 |
| 70 | 61.528 | 70 | |
| | 50.360 | 65 | 3.0 |
| | 37.368 | 65 | 6.0 |

Table 1 illustrates the radius of curvature of a curved surface (concave surface) of an elastic body which can form parallel grooves in the convex surface of a lens base, and a lens base which can be worked by this elastic body, assuming that the rotation speed of the elastic body is 1500 rpm, the feeding speed is 1000 mm/min, and the feeding amount is 75 mm. The term "feeding speed" here refers to a relative speed when the rotary shaft of the elastic body moves relative to the lens base surface in the direction of forming the parallel grooves, and the "feeding amount" indicates a relative movement distance by which the elastic body moves with respect to the lens base in the direction of forming the parallel grooves. As will be appreciated from Table 1, lens bases having different radiuses of curvature can be worked with one elastic body. For example, the elastic body having the radius of curvature of the rotating surface of 70 mm can work the lens base with the radius of curvature of 66.517 to 37.368 mm. Also, the elastic body having the radius of curvature of the rotating surface of 600 mm can work the lens base having the radius of curvature of 979.077 to 209.580 mm. That is, as in the example illustrated in Table 1, by preparing, for example, 5 pieces of elastic bodies, respectively having rotating surfaces with different radiuses of curvature, for example, the lens bases of substantially all the shapes required in practice can be worked.

When the convex surface of a lens base is pushed into the rotating surface of an elastic body with a certain pushing-in amount, if the radius of curvature of the lens base is smaller than the radius of curvature of the rotating surface of the elastic body, the pressure on the center part of the lens base received from the elastic body becomes the largest, while the pressure on the outer peripheral part of the lens base becomes the smallest. If the radius of curvature of a lens base is larger than the radius of curvature of the rotating surface of an elastic body, the pressure on the outer peripheral part of the lens base becomes the largest, while the pressure on the center part of the lens base becomes the smallest.

The material of the elastic body is not particularly limited. For example, it may be a sponge material formed by foaming and molding various elastomers, or a bag made of an elastic material such as rubber, in which gas or solution is encapsulated and to which a film material which can hold abrasive grains (e.g., porous film, woven cloth, unwoven cloth, and abrasive cloth of suede type) is attached. Particularly, the sponge material which is inexpensive and easy to be worked with respect to the shape is suitable as the elastic body for groove formation.

The abrasive grains for scratching the lens base are held on the surface of the rotating surface of the elastic body.

As the abrasive grains, a material which can form parallel grooves on the lens base by scratching is appropriately selected and used. If a polarizing dye arrangement layer for arranging dyes is to be formed, a material which can form parallel grooves on a coating thereof is appropriately selected and used. For example, hard resin, various oxides, metal particulates, etc. can be appropriately selected and used.

If a sol-gel film in which an inorganic sol, a silane coupling agent, etc. coexist is formed as a polarizing dye arrangement layer for example, hard resin, various oxides, metal particulates, and the like are selected and used. Moreover, if parallel grooves are to be formed in the lens base surface on which a glass-like surface coating has been formed by deposition or the like, abrasive grains harder than a deposition coating are selected. If parallel grooves are to be formed in a deposition film of a hard material such as alumina, zirconia, silica, and the like, abrasive grains with hardness higher than the deposition film of a hard material are selected and used. If a deposition silica layer is formed on the lens base surface and parallel grooves are to be formed in this layer, as the material for the abrasive grains, for example, alumina, ceria, silicon carbide and the like are appropriately selected and used. Moreover, unless chemical alteration of the polarizing dye arrangement layer or that of the lens base is intended, a material not having reactivity with them is preferably selected for the abrasive grains.

The state that abrasive grains are held by an elastic body is not particularly limited. For example, abrasive grains are fixed on the surface of a sponge-like elastic body. Alternatively, the held state of abrasive grains may be ensured by supplying slurry containing abrasive grains to a medium that can hold the slurry containing abrasive grains. Furthermore, a sheet on which abrasive grains are fixed can be attached to the elastic body.

### <Step S6>

Scratching treatment is performed in one axial direction of the lens base using the elastic body for forming grooves selected in Step S5, and parallel grooves in the one axial direction are formed. The scratching treatment is performed by abrasive grains for polishing held on the surface of the rotating surface of the elastic body.

The elastic body having a rotating shape is rotated around the center axis of the rotation. At this time, the elastic body is rotated in the state that the lens base surface is in elastic contact with the rotating surface of the elastic body, or the lens base is brought into elastic contact with the rotating surface of the elastic body that is rotating. The elastic body or the lens base is moved in the direction of forming the parallel grooves in the state that the lens base is pressed onto the rotating surface of the elastic body as described above, and thereby the parallel grooves are formed on the whole region of the lens base surface. It is only necessary that the whole region of the polarizing element forming surface of the lens base is in contact with the rotating surface of the elastic body by one linear scratching caused by rotation of the rotating body. The parallel grooves are formed in the rotating direction of the elastic body.

If the polarizing dye arrangement layer has been formed on the lens base surface, the parallel grooves are formed in the polarizing dye arrangement layer. Alternatively, if the lens base surface has not been coated, the parallel grooves are directly formed in the lens base surface.

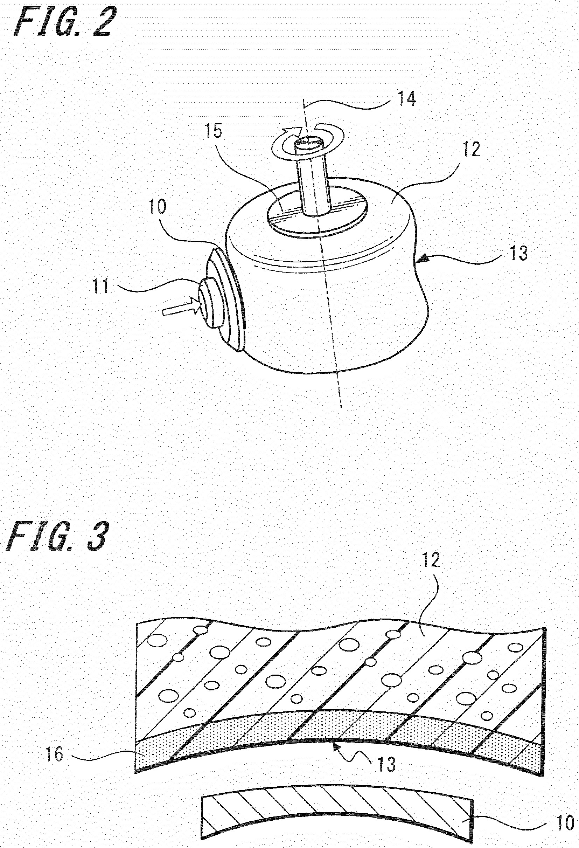

An appearance view of the elastic body and the lens base in a step in which parallel grooves are formed in the lens base is illustrated in Fig. 2. Fig. 2 illustrates formation of the parallel grooves when a polarizing element is formed on the convex surface side of the lens base.

Fig. 2 illustrates a lens base 10, a jig 11 which presses the lens base 10 onto an elastic body, an elastic body 12 having a rotating body shape, a rotating surface 13 of the elastic body 12, and a jig 15 which has a rotary shaft 14 and holds the elastic body 12.

The jig 15 which holds the elastic body 12 is rotated by the rotary shaft 14. The elastic body 12 has a rotating body shape, and is provided with the rotating surface 13 in the direction substantially in parallel with the rotary shaft 14. The elastic body 12 includes this rotating surface 13.

The rotating surface 13 onto which the lens base 10 is pressed by the jig 11 has a structure having a curved surface conforming to the radius of curvature of the convex surface of the lens base 10. The relationship of this rotating surface 13 and the lens base 10 is illustrated in Fig. 3. As illustrated in Fig. 3, the rotating surface 13 of the elastic body 12 is provided with a curved surface proximate to the radius of curvature of the convex surface of the lens base 10.

Moreover, as illustrated in Fig. 3, abrasive grains 16 for scratching the lens base 10 are held on the rotating surface 13 onto which this lens base 10 is pressed.

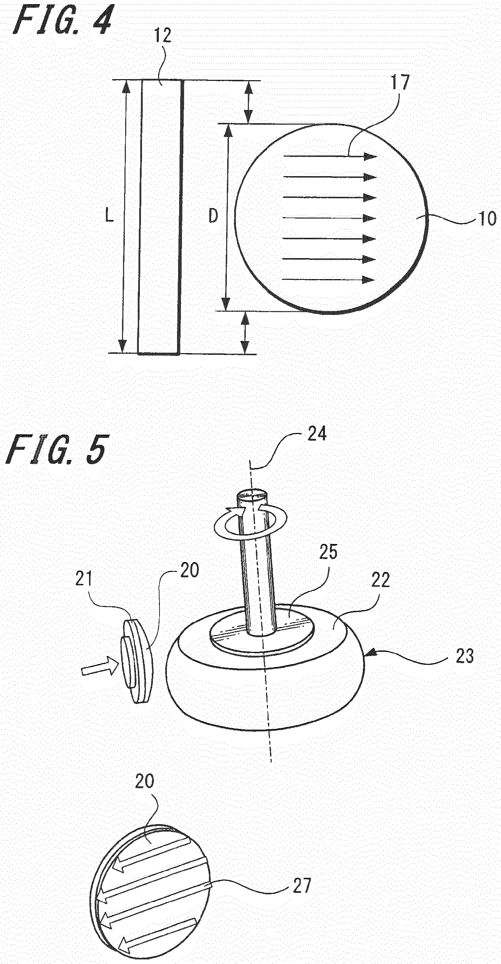

At this time, as illustrated in Fig. 4, a length L in the rotary shaft direction of the rotating surface 13 of the elastic body 12 is longer than a diameter D (diameter in the direction orthogonal to the direction of the parallel grooves to be formed) of the lens base 10. Moreover, the abrasive grains 16 are held by the rotating surface 13 of the elastic body 12 in the region that is also longer than the diameter of the lens base 10. By setting the length L in the rotary shaft direction of the rotating surface 13 of the elastic body 12 longer than the diameter of the lens base 10, the parallel grooves in a parallel-groove forming direction 17 indicated by arrows on the lens base 10 can be formed by one scratching.

If the elastic body is provided with a rotating surface having a radius of curvature extremely different from that of the surface of the lens base to be worked, there might be a region where the lens base is not in elastic contact with the rotating surface of the elastic body when the lens base is pressed onto the elastic body. Moreover, a large difference in elastic contact pressure might occur in the contact surface of the lens base with the rotating surface of the elastic body depending on the region of the lens base that is brought in elastic contact with the rotating surface of the elastic body. In such a case, it becomes difficult to form uniform parallel grooves on the whole region of the lens base surface.

The parallel grooves can be reliably formed on the whole region of the lens base surface by using the elastic body having a rotating surface with a curved shape proximate to the radius of curvature of the convex surface of the lens base.

Even if the rotating surface of an elastic body has a curved surface proximate to the curved surface of the convex surface of a lens base as described above, the formation frequency of the parallel grooves might be different depending on the distribution of scratching pressure on the lens base surface. However, it has been conformed that no difference is caused in fixation and arrangement of the polarizing dye if the parallel grooves are formed on the lens base surface having the average surface roughness within a range of 0.5 to 5 nm. Since the allowance for the average surface roughness in dye fixation is wide as described above, fabrication of a polarizing lens through formation of parallel grooves in the lens base and formation of a polarizing element by arrangement of a polarizing dye in the parallel grooves as in this embodiment become possible. If the surface roughness exceeds 5 nm, although the polarizing dye is still equally fixed, it is not preferable from the viewpoint of the design of spectacle lenses since the grooves can be visually confirmed, or deterioration of optical characteristics is caused by scattering of light.

### <Step S7>

A polarizing dye is applied in the parallel grooves formed in the polarizing element forming surface of the lens base, and the polarizing dye is fixed in the polarizing dye arrangement layer, and thereby a polarization layer is formed.

The polarizing dye to be fixed in the polarizing dye arrangement layer is a dye including one or more types of dichromatic dyes.

The dichromatic dye includes a medium having an anisotropic nature of selective absorption of light. Thus, transmission light indicates a different nature depending on the propagation direction. The dichromatic dye has a nature that light absorption becomes strong in a specific direction of the dye molecule with respect to the polarization light, and the light absorption becomes small in the direction orthogonal to that.

The dichromatic dye includes a substance that expresses a liquid crystalline state within specific ranges of concentration and temperature when water is used as a solvent. This liquid crystalline state is referred to as lyotropic liquid crystal. By causing the polarizing dye to be aligned in one direction using the lyotropic liquid crystal, the anisotropic nature of light absorption of a polarizing element can be realized.

As the dichromatic dye, azoic, anthraquinone, merocyanine, styryl, azomethine, quinine, Quinophthalone, perylene, indigo, tetrazine, benzidine, and other known dichromatic dyes can be used.

Usually, the surface of the lens base in which parallel grooves have been formed is washed and dried before the polarizing dye including dichromatic dyes is applied. An aqueous solution or suspending solution containing dichromatic dyes is applied on the surface of the lens base in which parallel grooves have been formed. The method of application is not particularly limited, and known application methods including a spin coat method, a dip coat method, a flow coat method, a spray coat method, and the like can be used.

By applying the polarizing dye including dichromatic dyes on the lens base in which parallel grooves have been formed and by fixing the polarizing dye, the polarizing dye is arranged on the lens base surface. Because the parallel grooves are formed uniformly over the whole region of the surface of the lens base, the polarizing dye is also arranged uniformly over the entire region of the surface of the lens base. Thus, a polarizing element can be formed on the lens base by the arranged polarizing dye.

### <Step S8>

Stabilization treatment for the polarizing dye applied on the lens base surface is performed.

The polarizing dye is made non-aqueous by a stabilizing agent, and the arranged polarizing dye is fixed. As the result of stabilization of the polarizing dye, a non-aqueous polarizing dye layer is formed on the lens base.

A metal salt solution is used as the stabilizing agent for the stabilization treatment. Aluminum chloride, barium chloride, zinc chloride, iron chloride, tin chloride, and the like can be used as the metal salt.

Moreover, an aqueous inorganic compound is added appropriately in order to adjust pH appropriately. Aluminum chloride and zinc chloride are preferable for the metal salt to be used in the stabilization treatment from the viewpoint of safety.

The thickness of the polarizing dye layer is not particularly limited, but it is preferably about 0.05 to 1 µm.

### <Step S9>

A dye fixation layer is formed on the polarizing dye layer in order to protect the polarizing dye layer formed on the lens base.

Various organic silicon compounds are used for the dye fixation layer. Specifically, glycidoxy-group containing alkoxysilan, epoxy-group containing alkoxysilane, and amino-group containing alkoxysilan are used. One type or two types or more of silane compounds may be included.

The dye fixation layer is applied on the lens base by applying an organic silicon compound on the polarizing dye layer using any of known application methods including a dip coat method, a spin coat method, a spray coat method, etc.

### <Step S10>

The dye fixation layer is formed by thermally curing the organic silicon compound applied on the lens base. The organic silicon compound penetrates into the polarizing dye layer by being applied on the lens base. When the compound is cured in the penetrated state, the polarizing dye layer and the dye fixation layer become an integrated layer. As described above, by forming the polarizing dye layer and the dye fixation layer, the polarizing dye is fixed, and thus the polarizing element can be formed on the lens base. The thickness of the polarizing element is not particularly limited but is preferably about 0.05 to 2 µm.

### <Step S11>

After the polarizing element is formed on the lens base in the above-described process, various coat layers are formed on the polarizing element as necessary. For example, a hard coat layer which improves scratch resistance is formed on the polarizing element. Moreover, functional coat layers such as a reflection preventive layer, a water repellant layer, a UV absorption layer, an infrared absorption layer, a photochromic layer, an antistatic layer, etc. are formed. These coat layers can be formed by known methods.

### Examples

### (Examples)

Using nine types of lenses illustrated in the following Table 2 for lens bases, polarizing lenses were formed as examples by forming parallel grooves in respective lenses by scratching with an elastic body. First, the lenses (Table 2), each formed of polyurethane having refractive index of 1.53 and having a hard coat layer formed on the upper face thereof, were prepared. Then, a silica deposition layer serving as a polarizing dye arrangement layer was formed on the hard coat layer of each lens. The polarizing dye arrangement layer was formed approximately 250 nm thick.

In various lenses illustrated in Table 2, a finished lens refers to a lens whose both surfaces are finished lens surfaces. A semi finished lens refers to a lens whose one face is a finished lens surface. A progressive refracting power lens refers to a lens whose refracting power continuously changes from an upper part to a lower part. "BC" described in the column for diopter refers to a base curve (a radius of curvature of a reference line in a horizontal direction which becomes a reference), and "ADD" refers to addition power (difference between diopter power for distance and diopter power for near in bifocal spectacle lenses).

**[Table 2]**

| Lens base | Diopter | Ø (mm) | Pushing-in amount (mm) |
|---|---|---|---|
| Finished lens | +0.50 | 70 | 2.0 |
| | +4.50 | 70 | 5.0 |
| | -2.00 | 70 | 2.0 |
| | -5.00 | 70 | 5.0 |
| Semi-finished lens | BC700 | 70 | 5.0 |
| | BC800 | 70 | 5.0 |
| Progressive refracting power lens | BC400ADD075 | 75 | 3.0 |
| | BC400ADD200 | 75 | 3.0 |
| | BC400ADD350 | 75 | 3.0 |

Next, the shape of the surface of the lens base on which a polarizing element is to be formed, in these examples, the convex surface side of the lens base, was checked. An elastic body having a curved surface in conformity with the shape of the lens base was selected. In these examples, an elastic body in which a curved surface of the rotating surface has a radius of curvature of 120 mm was used.

For abrasive grains, alumina abrasive grains having an average grain size of 3 µm (product name "POLIPLA304M" by Fujimi Incorporated) was used.

Next, parallel grooves were formed on the lens base by pressing the lens base onto the rotating surface of the above-described elastic body. The rotating speed of the elastic body at this time was 1500 rpm, the feeding speed was 1000 mm/min, and the number of times of feedings was 1.

After parallel grooves have been formed in the polarizing dye arrangement layer, a polarizing dye was applied. As the polarizing dye, a dichromatic dye, Varilight solution 2S (product name) by Sterling Optics Inc., was used. A coat film was formed on the lens base by a spin coat method, using 2 to 3g of aqueous solution containing approximately 5 mass % of this dichromatic dye. In the spin coating, the polarizing dye aqueous solution was supplied at the rotation speed of 300 rpm, the rotation was held for 45 seconds, and further, the polarizing dye aqueous solution was supplied at the rotation speed of 1000 rpm, and the rotation was held for 12 seconds.

Next, stabilization treatment of the polarizing dye to make the dye non-aqueous was performed, in which the lens base on which the polarizing dye has been applied was immersed in an aqueous solution of pH4 containing aluminum chloride, calcium hydroxide, and magnesium hydroxide.

Next, the lens base after the stabilization treatment was immersed in 10 mass% aqueous solution of γ-amino propyltriethoxysilane for 30 minutes, washed by purified water three times, and thermally cured at 85 °C for 30 minutes. After cooling, the lens base was immersed in a 2 mass% aqueous solution of γ-glycidoxypropyltrimethoxysilane for 30 minutes in the air, and then, thermally cured in a furnace at 100°C for 30 minutes. After the curing, the lens base was cooled, and thereby a lens in which a dye fixation layer has been formed was obtained.

With the above-described process, polarizing lenses were fabricated using nine types of lenses illustrated in Table 2 for the lens bases.

### (Comparative Example)

A wheel brush made of polyurethane in a shape illustrated in Fig. 5 was used as the elastic body for forming parallel grooves. Fig. 5 illustrates a lens base 20, a jig 21 for pressing the lens base 20 onto an elastic body, a wheel brush 22 made of polyurethane as an elastic body, a working surface 23 of the wheel brush 22, and a jig 25 having a rotary shaft 24 and holding the wheel brush 22.

Parallel grooves were formed on a surface of the lens base 20 by pressing the lens base 20 to the wheel brush 22 with the jig 21 and rotating the wheel brush 22. The wheel brush 22 used in formation of the parallel grooves in the lens base 20 is configured such that the length of the wheel brush 22 in the direction of the rotary shaft 24 is smaller than the diameter of the lens base 20 to be brought into contact. Moreover, while the lens base 20 has a convex surface on which grooves are to be formed, the working surface of the wheel brush 22 also has a convex surface.

In order to form parallel grooves on the entire region of the convex surface of the lens base 20 as illustrated in Fig. 5, the wheel brush 22 was brought into contact with the lens base 20 several times, from the side part of the lens base 20, with an interval of 5 mm in a parallel-groove forming direction 27, and thereby the parallel grooves were formed.

Except for this process, the polarizing lens was fabricated by the same method as in the above-described examples.

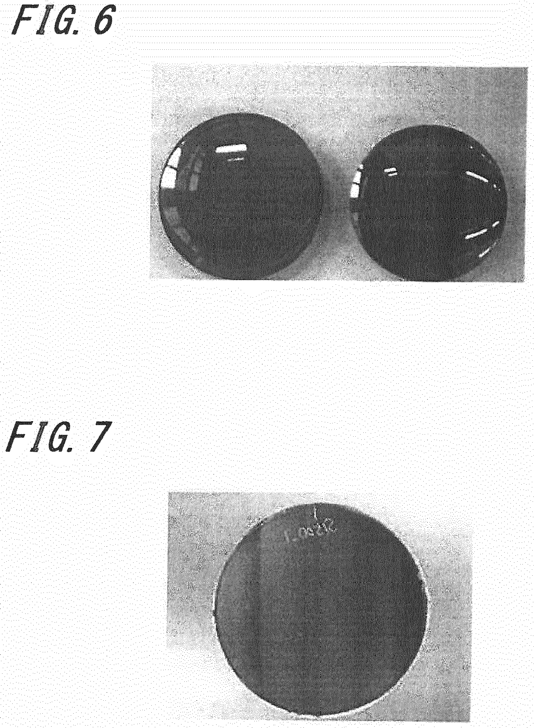

In all the polarizing lenses fabricated as examples, no uneven polarization was found. Fig. 6 shows two examples of the fabricated polarizing lenses. The left side in Fig. 6 shows a polarizing lens fabricated using a progressive refracting power lens as the lens base, while the right side shows a polarizing lens fabricated using a BC800 semi finished lens as the lens base.

On the other hand, in the polarizing lens fabricated as a comparative example, patchy unevenness was formed in the polarization characteristics as illustrated in Fig. 7. The streaky dark and light parts on the polarizing lens were formed because the grooves in the dark areas and the grooves in the light areas were formed in directions different from each other. It is believed that the dark parts were caused because twists were generated on the rotating surface of the wheel brush contacting with the lens base when the lens base and the wheel brush were brought into contact with each other and grooves flowing in a diagonal direction from the advancing direction for forming grooves were formed. Thus, it is believed that the polarizing dye was oriented in a different direction, and dark and light tones were generated in the polarizing lens.

In the foregoing, the manufacturing method for a polarizing lens in which a polarizing element is formed on a lens base by applying a polarizing dye on the lens base has been described, but the manufacturing method for a polarizing element of the present invention can be applied not only to the lens base but also to an inorganic glass base, a resin base, and the like.

Even if the base for forming a polarizing element is not a lens base, the polarizing element can be manufactured on the base by performing a step of forming a dye arrangement layer, a step of checking the shape of the surface of the base on which a polarizing dye is applied, a step of selecting an elastic body, a step of forming parallel grooves, a step of applying the polarizing dye, a step of performing stabilization treatment of the polarizing dye, a step of applying a dye fixation layer, a step of performing drying treatment, and the like as necessary.

In the present invention, an excellent effect can be obtained particularly if the polarizing element forming surface of the base has a convex surface.

The present invention is not limited to the configuration explained in the above-described embodiment but is capable of various deformations and changes within a range not departing from the configuration of the present invention.

### Explanation of Reference Signs

- 10, 20: lens base
- 11, 15, 21, 25: jig
- 12: elastic body
- 13: rotating surface
- 14, 24: rotary shaft
- 17, 27: parallel-groove forming direction
- 22: wheel brush
- 23: working surface

## Claims

1. A method for manufacturing a polarizing element, comprising steps of:
forming parallel grooves on a convex surface of a base (10) by pressing the convex surface of the base onto a rotating surface (13) of an elastic body (12) and rotating the elastic body (12), the rotating surface (13) holding abrasive grains;
applying a polarizing dye on the convex surface of the base (10) on which the parallel grooves have been formed; and
fixing the polarizing dye,
**characterized in that** the elastic body (12) has a length in a rotary shaft direction larger than a diameter of the base (10).

2. The method for manufacturing a polarizing element according to claim 1, wherein in the step of forming parallel grooves, the parallel grooves are formed by the rotating surface (13) having a concave curved surface corresponding to the convex surface of the base (10).

3. The method for manufacturing a polarizing element according to claim 2, wherein in the step of forming parallel grooves, the whole region of the convex surface of the base (10) is brought into contact with the rotating surface of the elastic body (12) by pushing in the base (10) onto the rotating surface of the elastic body (12).

4. The method for manufacturing a polarizing element according to claim 2, wherein in the step of forming parallel grooves, the parallel grooves are formed on the whole region of the convex surface of the base (10) by moving the elastic body (12) or the base (10) in the forming direction of the parallel grooves while the base (10) is pressed onto the rotating surface of the elastic body (12).

5. The method for manufacturing a polarizing element according to claim 1, wherein the polarizing element is a polarizing lens.

## Patentansprüche

1. Verfahren zum Herstellen eines polarisierenden Elements, umfassend die folgenden Schritte:
Bilden von parallelen Rillen auf einer konvexen Oberfläche einer Basis (10) durch Drücken der konvexen Oberfläche der Basis auf eine rotierende Oberfläche (13) eines elastischen Körpers (12) und Rotieren des elastischen Körpers (12), wobei die rotierende Oberfläche (13) abrasive Körner hält;
Aufbringen eines polarisierenden Farbstoffs auf die konvexe Oberfläche der Basis (10), auf der die parallelen Rillen gebildet worden sind; und
Fixieren des polarisierenden Farbstoffs,
**dadurch gekennzeichnet, dass** der elastische Körper (12) eine Länge in einer Rotationswellenrichtung größer als ein Durchmesser der Basis (10) hat.

2. Verfahren zum Herstellen eines polarisierenden Elements nach Anspruch 1, wobei in dem Schritt des Bildens von parallelen Rillen die parallelen Rillen durch die rotierende Oberfläche (13) mit einer konkaven gekrümmten Oberfläche entsprechend der konvexen Oberfläche der Basis (10) gebildet werden.

3. Verfahren zum Herstellen eines polarisierenden Elements nach Anspruch 2, wobei in dem Schritt des Bildens von parallelen Rillen die gesamte Region der konvexen Oberfläche der Basis (10) in Kontakt mit der rotieren Oberfläche des elastischen Körpers (12) gebracht wird, indem die Basis (10) auf die rotierende Oberfläche des elastischen Körpers (12) gedrückt wird.

4. Verfahren zum Herstellen eines polarisierenden Elements nach Anspruch 2, wobei in dem Schritt des Bildens von parallelen Rillen die parallelen Rillen auf der gesamten Region der konvexen Oberfläche der Basis (10) gebildet werden, indem der elastische Körper (12) oder die Basis (10) in der Bildungsrichtung der parallelen Rillen bewegt wird, während die Basis (10) auf die rotierende Oberfläche des elastische Körpers (12) gedrückt wird.

5. Verfahren zum Herstellen eines polarisierenden Elements nach Anspruch 1, wobei das polarisierende Element eine polarisierende Linse ist.

## Revendications

1. Procédé de fabrication d'un élément polarisant, comprenant des étapes de :
formation de rainures parallèles sur une surface convexe d'une base (10) par appui de la surface convexe de la base sur une surface rotative (13) d'un corps élastique (12) et rotation du corps élastique (12), la surface rotative (13) contenant des grains abrasifs ;
application d'un colorant polarisant sur la surface convexe de la base (10) sur laquelle les rainures parallèles ont été formées ; et
fixation du colorant polarisant,
**caractérisé en ce que** le corps élastique (12) a une longueur dans une direction d'arbre de rotation plus grande qu'un diamètre de la base (10).

2. Procédé de fabrication d'un élément polarisant selon la revendication 1, dans lequel à l'étape de formation de rainures parallèles, les rainures parallèles sont formées par le fait que la surface rotative (13) a une surface incurvée concave correspondant à la surface convexe de la base (10).

3. Procédé de fabrication d'un élément polarisant selon la revendication 2, dans lequel à l'étape de formation de rainures parallèles, la région entière de la surface convexe de la base (10) est amenée en contact avec la surface rotative du corps élastique (12) par poussée de la base (10) sur la surface rotative du corps élastique (12).

4. Procédé de fabrication d'un élément polarisant selon la revendication 2, dans lequel à l'étape de formation de rainures parallèles, les rainures parallèles sont formées sur la région entière de la surface convexe de la base (10) par déplacement du corps élastique (12) ou de la base (10) dans la direction de formation des rainures parallèles pendant que la base (10) est appuyée sur la surface rotative du corps élastique (12).

5. Procédé de fabrication d'un élément polarisant selon la revendication 1, dans lequel l'élément polarisant est une lentille polarisante.
